# EUROPEAN PATENT APPLICATION

(11) **EP 3 860 088 A2**
(43) Date of publication of application: **04.08.2021**
(21) Application number: 21177356.9
(22) Date of filing: 02.06.2021
(51) Int. Cl.: H04L 29/06, H04L 12/741

(54) **NETWORK DATA PROCESSING METHOD, APPARATUS, ELECTRONIC DEVICE AND STORAGE MEDIUM**

(30) Priority: 05.06.2020 CN 202010508174
(71) Applicant: BEIJING BAIDU NETCOM SCIENCE AND TECHNOLOGY CO. LTD., 100085 Beijing (CN)
(72) Inventor: JI, Kunpeng, BEIJING, 100085 (CN); YANG, Shuangquan, BEIJING, 100085 (CN)
(74) Representative: Bittner, Bernhard

(57) **Abstract**

A network data processing method and apparatus, an electronic device, and a storage medium are provided, which are related to the fields of big data and cloud computing. The specific embodiment is: acquiring a plurality of network access records, each of which includes a source address and a target address; determining a first redirect relationship from the source address to the target address in a respective network access record of the plurality of network access records; determining a set of redirect relationships for all of addresses in the plurality of network access records according to a plurality of first redirect relationships; and acquiring an address to be searched, and determining a final address to which the address to be searched is redirected according to the set of redirect relationships. The embodiment of the present application can be used for tracking addresses, which is beneficial to network security supervisions.

## Description

### TECHNICAL FIELD

The present application relates to a field of data processing, in particular to, fields of big data and cloud computing.

### BACKGROUND

Virtual Private Network (VPN) is a kind of popular remote network access technology, and it is also a network access means that is often used by enterprise employees or branches to access enterprise Intranet server resources.

With the rapid development of information technology, network security has gradually become a huge potential problem. At present, some netizens use the VPN that can turn over the wall layer by layer to cover up their real network addresses, and carry out illegal behaviors on the network, which brings a huge hidden danger to the network and information security.

### SUMMARY OF THE INVENTION

The present application provides a network data processing method and apparatus, an electronic device, and a storage medium.

According to an aspect of the present application, there is provided a network data processing method, including:
acquiring a plurality of network access records, each of the plurality of network access records includes a source address and a target address;
determining a first redirect relationship from the source address to the target address in a respective network access record of the network access records;
determining a set of redirect relationships for all of addresses in the plurality of network access records according to a plurality of first redirect relationships of the plurality of network access records; and
acquiring an address to be searched, and determining a final address to which the address to be searched is redirected according to the set of redirect relationships.

According to another aspect of the present application, there is provided a network data processing apparatus, including:
an acquiring module for acquiring a plurality of network access records, each of the plurality of network access records includes a source address and a target address;
a first determination module for determining a first redirect relationship from the source address to the target address in a respective network access record of the network access records;
a second determination module for determining a set of redirect relationships for all of addresses in the plurality of network access records according to a plurality the first redirect relationships; and
a third determination module for acquiring an address to be searched, and determining a final address to which the address to be searched is redirected according to the set of redirect relationships.

According to another aspect of the present application, there is provided an electronic device, including:
at least one processor; and
a memory communicatively connected with the at least one processor, wherein
the memory stores instructions executable by the at least one processor, the instructions are executed by the at least one processor to enable the at least one processor to perform the method provided in any embodiment of the present application.

According to another aspect of the present application, a non-transitory computer readable storage medium for storing computer instructions is provided. The computer instructions, when executed by a computer, cause the computer to perform the method provided in any embodiment of the present application.

According to the technical scheme of the present application, a set of redirect relationships of the addresses in the network may be determined by using the network access records, so that a final address of address to be searched may be determined by using a set of redirect relationships for an address to be searched. Therefore, it is possible to track a network address concealed by a VPN that turns over a wall, which is conducive to network security supervision.

It should be understood that the content described in this section is not intended to identify key or important features of the embodiment of the present application, nor is it intended to limit the scope of the present application. Other features of the present application will be easily understood through the following description.

### BRIEF DESCRIPTION OF THE DRAWINGS

The drawings are used to better understand the present solution and do not constitute definition to the present application. Among the drawings:
FIG. 1 is a schematic diagram according to a first embodiment of the present application;
FIG. 2 is a schematic diagram according to a second embodiment of the present application;
FIG. 3 is a schematic diagram of application of an embodiment of the present application;
FIG. 4 is a schematic diagram according to a third embodiment of the present application;
FIG. 5 is a schematic diagram according to a fourth embodiment of the present application; and
FIG. 6 is a block diagram of an electronic device used to implement a network data processing method according to an embodiment of the present application.

### DETAILED DESCRIPTION OF THE PREFERRED EMBODIMENTS

The exemplary embodiments of the present application are described below in conjunction with the accompanying drawings, which include various details of the embodiments of the present application to facilitate understanding, and should be regarded as merely exemplary. Therefore, those ordinarily skilled in the art should realize that various changes and modifications can be made to the embodiments described herein without departing from the scope and spirit of the present application. Likewise, for clarity and conciseness, descriptions of well-known functions and structures are omitted in the following description.

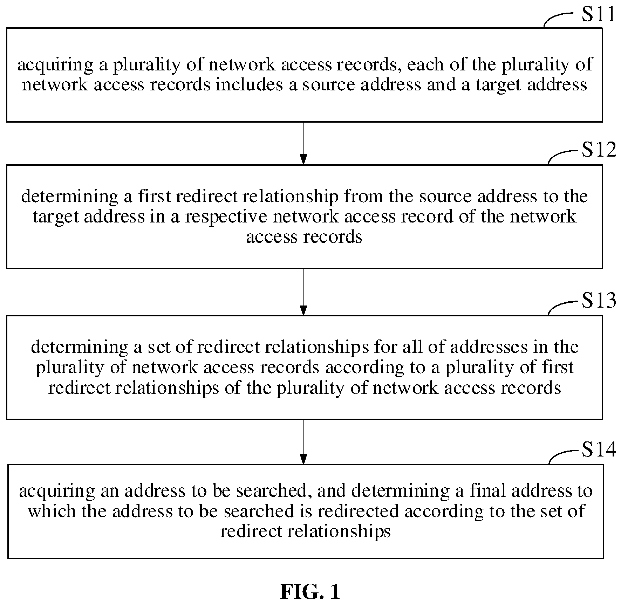

FIG. 1 shows a flowchart of a network data processing method according to an embodiment of the present application, as shown in FIG. 1, the method includes:
a step S 11: acquiring a plurality of network access records, each of the plurality of network access records includes a source address and a target address;
a step S12: determining a first redirect relationship from the source address to the target address in a respective network access record of the network access records;
a step S13: determining a set of redirect relationships for all of addresses in the plurality of network access records according to a plurality of first redirect relationships of the plurality of network access records; and
a step S14: acquiring an address to be searched, and determining a final address to which the address to be searched is redirected according to the set of redirect relationships.

In the embodiment of the present application, the set of redirect relationships of the addresses in the network can be determined by using the network access records, so that the final address of the address to be searched can be determined by using the set of redirect relationships for the address to be searched. Therefore, it is possible to track the network address concealed by the VPN that turns over the wall, which is beneficial to network security supervisions.

Exemplarily, the addresses in the network access records are IP (Internet Protocol) addresses. The network access records are used to record redirect actions of a network user between the addresses, wherein the source address refers to an address before the redirect, and the target address refers to an address after the redirect. For example, if the address is redirected from an address A to an address B, then the address A is the source address and address B is the target address.

By using the set of redirect relationships of all addresses in the network access records, a final address to which a certain address to be searched is redirected can be determined. For example, the set of redirect relationships includes a redirect relationship from the address A to the address B, and also includes a redirect relationship from the address B to an address C, but does not include a redirect relationship from the address C to another address. If the address to be searched is the address A, it can be determined based on the set of redirect relationships that the final address to which the address A is redirected is the address C.

In an exemplary embodiment, in the step S13, a plurality of first redirect relationships may be utilized as respective redirect relationships in the set of redirect relationships.

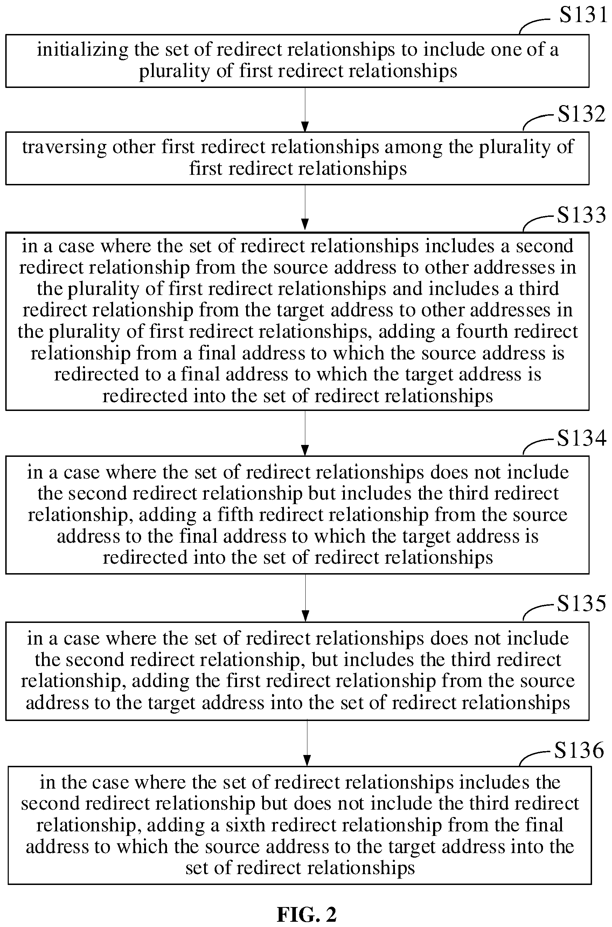

In an exemplary embodiment, with reference to FIG. 2, in the step S13, the determining the set of redirect relationships for all of the addresses in the plurality of network access records according to the plurality of first redirect relationships, comprises:
a step S131: initializing the set of redirect relationships to include one of a plurality of first redirect relationships;
a step S132: traversing other first redirect relationships among the plurality of first redirect relationships; and
a step S133: in a case where the set of redirect relationships includes a second redirect relationship from the source address to other addresses in the plurality of first redirect relationships and includes a third redirect relationship from the target address to other addresses in the plurality of first redirect relationships, adding a fourth redirect relationship from a final address to which the source address is redirected to a final address to which the target address is redirected into the set of redirect relationships.

For example, when traversing to the first redirect relationship that the address is redirected from the source address C0 to the target address D0, if the set of redirect relationships have already included the second redirect relationship from C0 to C1, and also have included a redirect relationship from DO to D1, the method will find the final address C3 to which the source address C is redirected and the final address D5 to which the target address D0 is redirected, and add the fourth redirect relationship from C3 to D5 into the set of redirect relationships. In this way, based on the fact that C0 is redirected to D0, a redirect relationship between a redirect network of C0 and a redirect network of D0 is determined, and the redirect relationship between the two redirect networks is represented by the redirect relationship from C3 to D5. Multiple redirect relationships from C0 to C3, C3 to D0, and D0 to D5 are simplified so that D5 can be found directly instead of finding D1 first. and then finding D5 step by step, when searching the final address to which an address (such as C1 or C2) is redirected in the relationship network of C0.

In this embodiment, redirect relationships for multiple addresses in two redirect networks are simplified in the set of redirect relationships, thereby improving the efficiency of determining a final address to which the address to be searched is redirected.

Exemplarily, with reference to FIG. 2, in the step S13, the determining the set of redirect relationships for all of the addresses in the plurality of network access records according to the plurality of first redirect relationships, further includes:
a step S134: in a case where the set of redirect relationships does not include the second redirect relationship but includes the third redirect relationship, adding a fifth redirect relationship from the source address to the final address to which the target address is redirected into the set of redirect relationships.

For example, when traversing to the first redirect relationship from the source address C0 to the target address D0, if the set of redirect relationships does not include the second redirect relationship from C0 to another address, but includes a redirect relationship from D0 to D1, the method will find the final address D5 to which D0 is redirected, and add the fifth redirect relationship from C3 to D5 into the set of redirect relationships. In this way, in the set of redirect relationships, the redirect relationships from C0 to D0 and from D0 to D5 are recorded accurately and simply as C0 to D5.

In this embodiment, while the accuracy of the redirect relationship in the set of redirect relationships is ensured, the redirect relationships for multiple addresses are simplified, which thus improves the efficiency of determining the final address to which the address to be searched is redirected.

Exemplarily, with reference to FIG. 2, in the step S13, the determining the set of redirect relationships for all of the addresses in the plurality of network access records according to the plurality of first redirect relationships, further includes:
a step S135: in a case where the set of redirect relationships does not include the second redirect relationship, but includes the third redirect relationship, adding the first redirect relationship from the source address to the target address into the set of redirect relationships.

For example, when traversing to the first redirect relationship from the source address C0 to the target address D0, if the set of redirect relationships does not include the second redirect relationship from C0 to another address, and does not include the third redirect relationship from D0 to another address, the method will add the first redirect relationship from C0 to D0 into the set of redirect relationships.

This embodiment improves the accuracy of the redirect relationships in the set of redirect relationships, and is favorable for accurately finding the final address to which the address to be searched is redirected.

Exemplarily, with reference to FIG. 2, in the step S13, the determining the set of redirect relationships for all of addresses in the plurality of network access records according to the plurality of first redirect relationships, further includes:
a step S136: in the case where the set of redirect relationships includes the second redirect relationship but does not include the third redirect relationship, adding a sixth redirect relationship from the final address to which the source address to the target address into the set of redirect relationships.

For example, when traversing to the first redirect relationship from the source address C0 to the target address D0, if the set of redirect relationships includes the second redirect relationship from C0 to C1 but does not include a redirect relationship from D0 to another address, to the method will find the final address C3 to which C0 is redirect, and add a sixth redirect relationship from C3 to D0 into the set of redirect relationships. Based on the fact that C0 is redirected to D0, a redirect relationship between a relationship network of C0 and D0 is established, and the established relationship between the relationship network of C0 and D0 is represented by an established relationship from C3 to D0. Multiple established relationships for multiple addresses from C0 to C3, and C3 to D0 are simplified.

In this embodiment, an established relationship between one established network and one address is simplified in the set of established relationships, which thus improves the efficiency of determining the final address to which the address to be searched is redirected.

As an exemplary embodiment, the set of redirect relationships is represented based on at least one tree structure dataset, wherein child nodes in the tree structure dataset are redirected to a parent node in the tree structure datum.

For example, the set of redirect relationships is represented based on a tree graph, or the redirect relationships in the set of redirect relationships are represented respectively based on a parent-child relationship array in the tree structure. The redirect relationship from the address A to the address B in the set of redirect relationships may be represented as a child node from A to B, wherein B is the parent node of A.

Since the tree structure dataset may accurately represent the relationship between the nodes, it is advantageous to accurately determine a final address to which the address to be searched is redirected by using the tree structure dataset to represent the set of redirect relationships.

Hereinafter a specific example of the present application in practical application will be provided by taking the redirect relationship represented by the parent-child relationship array as an example.

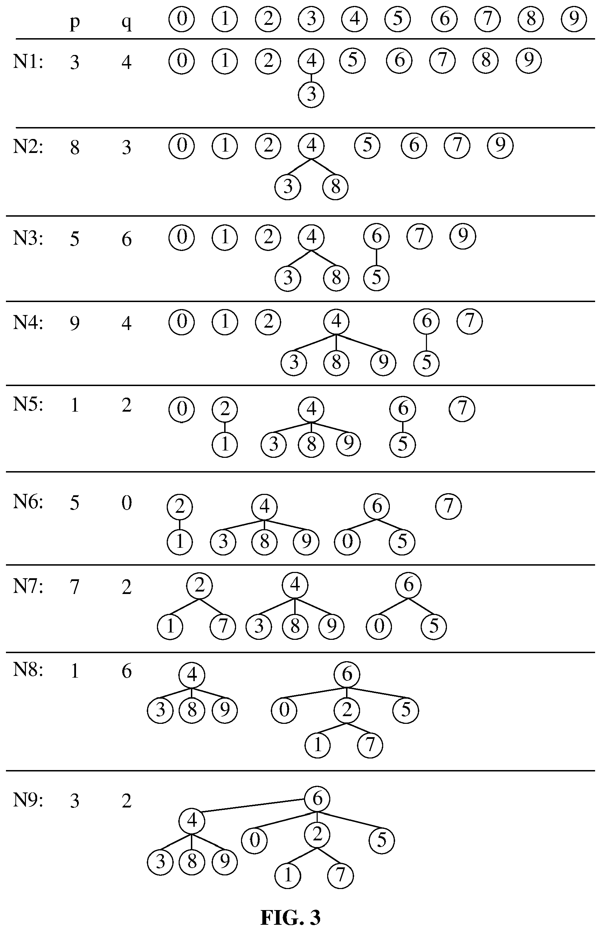

In this example, first the addresses in the acquired network access records are deduplicated, for example, 9 source addresses and 9 target addresses are extracted from 9 network access records. Then, it is determined whether there are the same addresses in the extracted addresses, and only one address is reserved in a plurality of the same addresses. The addresses after the deduplication process are numbered uniquely by increasing from 0, and referring to FIG. 3, 10 addresses are numbered from 0 to 9.

In a practical application, an array id[x] can be used to represent the parent-child relationship between id[x] and x. In the initialization stage, since the redirect relationship in the set of redirect relationships is not determined, let id[x]=x, that is, the address x itself is used as the parent node of the address x. At this time, referring to the addresses 0 to 9 at the top in FIG. 3, for each address x, there is no connection line from x to other nodes, and x is the root node, redirect relationships from x to other addresses are not included in the set of redirect relationships.

First, the set of redirect relationships is initialized to include a first redirect relationship N1. Referring to FIG. 3, if the source address p is 3 and the target address q is 4 in N1, the set of redirect relationships is initialized to include a redirect relationship from 3 to 4, and in this case, let id[3]=4, and a connection line from 3 to 4 is added into the tree graph on the right side in FIG. 3.

Then, other8 first redirect relationships N2 to N9 are traversed. Every time a first redirect relationship from p to q is traversed, it is determined whether there is a redirect relationship from p to another address in the set of redirect relationships according to whether id[p] is equal to p or not, that is, whether p is the root node in the tree graph. Similarly, it is determined whether there is a redirect relationship from q to another address in the set of redirect relationships. Then, according to the method of the embodiment of the present application, redirect relationships are added into the set of redirect relationships, and the array id[] is updated. A connection line from A to B is added into the tree graph on the right side in FIG. 3, indicating the update id[A]=B.

For example, when N2 from 8 to 3 is traversed, since 8, rather than 3, is the root node in the previous tree graph, that is, the set of redirect relationships does not include a connection line from 8 to other nodes but includes the connection line from 3 to 4. Thus, at first, the final address 4 to which the address 3 is redirected is determined by using the array id[3]=4 and id[4]=4, and then let id[8]=4, a redirect relationship that from 8 to 4 will be added into the set of redirect relationships.

For another example, when N3 from 5 to 6 is traversed, since 5 and 6 are both root nodes in the previous tree graph, let id[5]=6, a redirect relationship from 5 to 6 will be added into the set of redirect relationships.

When N4 from 9 to 4 is traversed, since 9 and 4 are both root nodes in the previous tree graph, let id[9]=4, a redirect relationship from 9 to 4 will be added into the set of redirect relationships.

When N5 from 1 to 2 is traversed, since 1 and 2 are both root nodes in the previous tree graph, let id[1]=2, a redirect relationship from 1 to 2 will be added into the set of redirect relationships.

When N6 from 5 to 0 is traversed, since 0, rather than 5, is the root node in the previous tree graph, thus the final address 6 to which the address 5 is redirected is determined by using the array id[5]=6 and id[6]=6, then let id[0]=6, a redirect relationship from 0 to 6 will be added into the set of redirect relationships.

When N7 from 7 to 2 is traversed, since 7 and 2 are both root nodes in the previous tree graph, let id[7]=2, a redirect relationship from 7 to 2 will be added into the set of redirect relationships.

When N8 from 1 to 6 is traversed, since 6, rather than 1, is the root node in the previous tree graph, thus the final address 2 to which the address 1 is redirected is determined by using the array id[1]=2 and id[2]=2, then let id[2]=6, a redirect relationship from 2 to 6 will be added into the set of redirect relationships.

When N9 from 3 to 2 is traversed, since neither 3 nor 2 is the root node in the previous tree graph, thus the final address 4 to which the address 3 is redirected is determined by using the array id[3]=4 and id[4]=4, and the final address 6 to which the address 2 redirects is determined by using the array id[2]=6 and id[6]=6, then let id[4]=6, a redirect relationship from 4 to 6 will be added into the set of redirect relationships.

When all the first redirect relationships are traversed, the set of redirect relationships includes a plurality of redirect relationships as shown in the tree graph at the bottom in FIG. 3, which are represented based on id[1] to id[9].

When an address to be searched is given, if the address to be searched is in the set of redirect relationships, the address to be searched may possibly be a node in a redirect link by which a certain VPN turns over the wall layer by layer. The final address to which the address to be searched is redirected can be found by utilizing the redirect relationship represented by the array id[] in the set of redirected relationships. Thus the address to which the VPN turns over the wall layer by layer is digged out. It is also possible to dig out all of addresses in the redirected network where the address to be searched is located.

In summary, in the embodiment of the present application, the set of redirected relationships of the addresses in the network can be determined by using the network access records, so that the final address of the address to be searched can be determined by using the set of redirected relationships for the address to be searched. Therefore, it is possible to track the network address concealed by the VPN that turns over the wall, which is beneficial to network security supervisions.

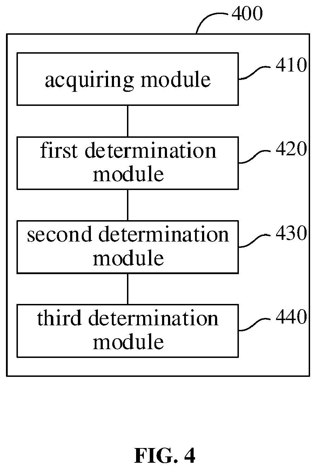

The present application further provides a network data processing apparatus, with reference to FIG. 4, the network data processing apparatus 400 includes:
an acquiring module 410 for acquiring a plurality of network access records, each of the plurality of network access records includes a source address and a target address;
a first determination module 420 for determining a first redirect relationship from the source address to the target address in a respective network access record of the network access records;
a second determination module 430 for determining a set of redirect relationships for all of addresses in the plurality of network access records according to a plurality the first redirect relationships; and
a third determination module 440 for acquiring an address to be searched, and determining a final address to which the address to be searched is redirected according to the set of redirect relationships.

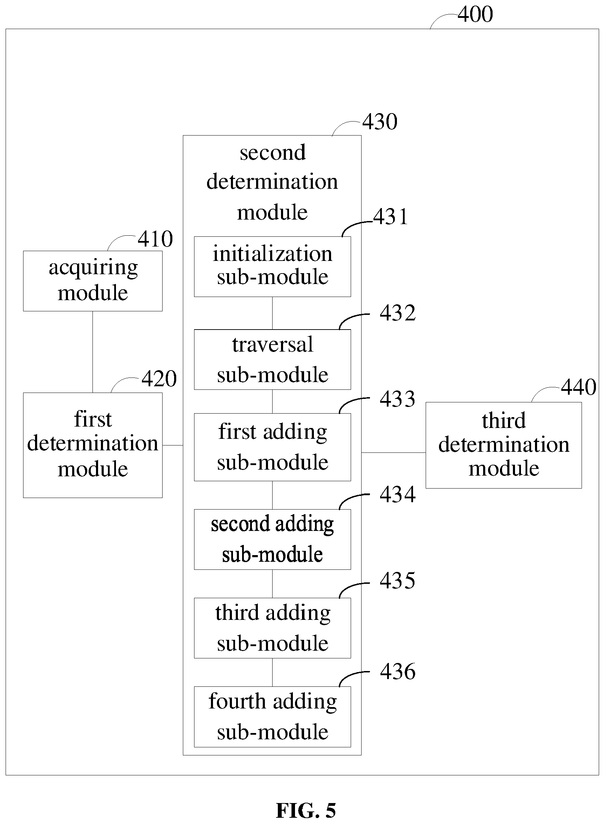

Exemplarily, with reference to FIG. 5, the second determination module 430 includes:
an initialization sub-module 431 for initializing the set of redirect relationships to include one of the plurality of first redirect relationships;
a traversal sub-module 432 for traversing other first redirect relationships among the plurality of first redirect relationships; and
a first adding sub-module 433 for, in a case where the set of redirect relationships includes a second redirect relationship from the source address to other addresses in the first redirect relationships, and includes a third redirect relationship from the target address to other addresses in the first redirect relationships, adding a fourth redirect relationship from a final address to which the source address is redirected to a final address to which the target address is redirected into the set of redirect relationships.

Exemplarily, with reference to FIG. 5, the second determination module 430 further includes:
a second adding sub-module 434 for, in a case where the set of redirect relationships does not include the second redirect relationship, but includes the third redirect relationship, adding a fifth redirect relationship from the source address to the final address to which the target address is redirected into the set of redirect relationships.

Exemplarily, with reference to FIG. 5, the second determination module 430 further includes:
a third adding sub-module 435 for, in a case where the set of redirect relationships does not include the second redirect relationship and includes the third redirect relationship, adding a first redirect relationship from the source address to the target address into the set of redirect relationships.

Exemplarily, with reference to FIG. 5, the second determination module 430 further includes:
a fourth adding sub-module 436 for, in a case where the set of redirect relationships includes the second redirect relationship but does not include the third redirect relationship, adding a sixth redirect relationship from the final address to which the source address to the target address into the set of redirect relationships.

Exemplarily, the set of redirect relationships is represented based on at least one tree structure dataset, wherein child nodes in the tree structure dataset are redirected to a parent node in the tree structure dataset.

According to the embodiments of the present application, the present application further provides an electronic device and a readable storage medium.

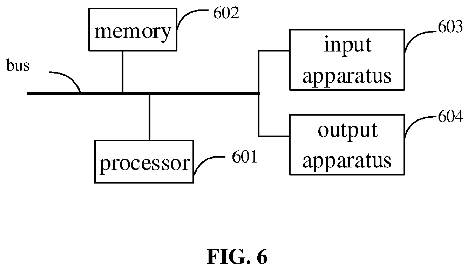

As shown in FIG. 6, a block diagram is shown of an electronic device for the network data processing method according to an embodiment of the present application. The electronic device is intended to represent various forms of digital computers, such as a laptop computer, a desktop computer, a work table, a personal digital assistant, a server, a blade server, a mainframe computer, and other suitable computers. The electronic device can also represent various forms of mobile devices, such as personal digital processing, a cellular phone, a smart phone, a wearable device, and other similar computing devices. The components shown herein, their connections and relationships, and their functions are merely examples, and are not intended to limit the implementation of the present application described and/or required herein.

As shown in FIG. 6, the electronic device includes: one or more processors 601 and memories 602, and an interface for connecting the components, including a high-speed interface and a low-speed interface. The components are connected to each other by using different buses, and can be installed on a common motherboard or installed in other ways as required. The processor may process instructions executed in the electronic device, including instructions stored in or on the memory to display graphical information of GUI (Graphical User Interface) on an external input/output apparatus (such as a display device coupled to an interface). In other embodiments, if necessary, multiple processors and/or multiple buses with multiple memories may be used together with multiple memories. Similarly, multiple electronic devices can be connected, and each device provides some necessary operations (for example, as a server array, a group of blade servers, or a multi-processor system). One processor 601 is taken as an example in FIG. 6.

The memory 602 is the non-transitory computer readable storage medium provided in the present application. Wherein, the memory stores instructions that can be executed by at least one processor, so that the at least one processor executes the network data processing method provided in the present application. The non-transitory computer readable storage medium of the present application stores computer instructions, and the computer instructions are used to cause a computer to execute the network data processing method provided in the present application.

As a non-transitory computer readable storage medium, the memory 602 can be used to store non-transitory software programs, non-transitory computer executable programs and modules, such as program instructions/modules corresponding to the network data processing method in the embodiment of the present application (such as the acquiring module 410, the first determination module 420 and the second determination module 430 that are shown in FIG. 4). The processor 601 executes various functional applications and data processing of the server by running the non-transitory software programs, the instructions and the modules that are stored in the memory 602, that is, implementing the network data processing method in the foregoing method embodiment.

The memory 602 may include a program storage area and a data storage area, wherein the program storage area may store an operating system and an application program required by at least one function; the data storage area may store data created based on use of an electronic device for implementing the network data processing method. Moreover, the memory 602 may include a high-speed random access memory, and may also include a non-transitory memory, such as at least one magnetic disk storage device, a flash memory device, or other non-transitory solid-state storage devices. In some embodiments, the memory 602 may optionally include a memory provided remotely with respect to the processor 601, and these remote memories may be connected to the electronic device for implementing the network data processing method via a network. Examples of the aforementioned network include, but are not limited to, Internet, a corporate Intranet, a local area network, a mobile communication network, and combinations thereof.

The electronic device for implementing the network data processing method may further include: an input apparatus 603 and an output apparatus 604. The processor 601, the memory 602, the input apparatus 603, and the output apparatus 604 may be connected through a bus or other methods, and in FIG. 6, for example, through a bus.

The input apparatus 603 can receive the input numeric or character information, and generate a key signal input related to user setting and function control of the electronic device for implementing the network data processing method, such as a touch screen, a keypad, a mouse, a track pad, a touch pad, an indicating rod, one or more mouse buttons, trackballs, joysticks and other input apparatuses. The output apparatus 604 may include a display device, an auxiliary lighting apparatus (for example, an LED), a haptic feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the system and technologies described herein can be implemented in a digital electronic circuit system, an integrated circuit system, an application-specific integrated circuit (ASIC), a computer hardware, a firmware, a software, and/or combinations thereof. These various embodiments may include: being implemented in one or more computer programs, the one or more computer programs may be executed and/or interpreted on a programmable system including at least one programmable processor, the programmable processor can be a dedicated or general-purpose programmable processor that can receive data and instructions from a storage system, at least one input apparatus, and at least one output apparatus, and transmit the data and instructions to the storage system, the at least one input apparatus, and the at least one output apparatus.

These computation programs (also referred to as programs, software, software application, or codes) include machine instructions of the programmable processors, and these computation programs can be implemented by using high-level procedures and/or object-oriented programming languages, and/or assembly/machine languages. As used herein, the terms "machine readable media" and "computer readable media" refer to any computer program product, device, and/or apparatus (such as a magnetic disk, an optical disk, a memory, a programmable logic devices (PLD)) used to provide machine instructions and/or data to a programmable processor, including a machine readable media that receives machine instructions as machine readable signals. The term "machine readable signals" refers to any signal used to provide machine instructions and/or data to a programmable processor.

In order to provide interaction with the user, the system and technology described herein can be implemented on a computer that has: a display device for displaying information to the user (such as a CRT (cathode ray tube) or an LCD (liquid crystal display) monitor)); and a keyboard and a pointing device (such as a mouse or a trackball) through which the user can provide the input to the computer. Other types of apparatuses can also be used to provide interaction with the user; for example, the feedback provided to the user can be any form of sensing feedback (for example, visual feedback, auditory feedback, or haptic feedback); and the input from the user can be received in any form (including acoustic input, voice input, or haptic input).

The system and technology described herein can be implemented in a computing system including back-end components (for example, as a data server), or a computing system including middleware components (for example, an application server), or a computing system including front-end components (for example, a user computer having a graphical user interface or a web browser through which the user can interact with the embodiment of the system and technology described herein), or a computing system including any combination of such back-end components, middleware components or front-end components. The components of the system can be connected to each other through digital data communication (for example, a communication network) in any form or media. Examples of the communication network include: a local area network (LAN), a wide area network (WAN), and an Internet.

The computer system can include a client and a server. The client and the server are generally far away from each other and usually interact through a communication network. The relationship between the client and the server is generated by computer programs that run on the corresponding computers and have a client-server relationship with each other.

According to the technical scheme of the present application, the set of redirect relationships of the addresses in the network can be determined by using the network access records, so that the final address of the address to be searched can be determined by using the set of redirect relationships for the address to be searched. Therefore, it is possible to track the network address concealed by the VPN that turns over the wall, which is conducive to network security supervision.

It should be understood that the various forms of processes shown above can be used to reorder, add or delete steps. For example, the steps described in the present application can be performed in parallel, or in sequence or in a different order, as long as the result desired by the technical solution disclosed in the present application can be achieved, and this is not limited herein.

The foregoing specific embodiments do not constitute limitation to the protection scope of the present application. Those skilled in the art should understand that various modifications, combinations, sub-combinations, and substitutions can be made based on design requirements and other factors. Any amendments, equivalent substitutions and improvements made within the spirit and principle of the present application are intended to be included within the protection scope of the present application.

## Claims

1. A network data processing method, comprising:
acquiring (S11) a plurality of network access records, each of the plurality of network access records includes a source address and a target address;
determining (S12) a first redirect relationship from the source address to the target address in a respective network access record of the network access records;
determining (S 13) a set of redirect relationships for all of addresses in the plurality of network access records according to a plurality of first redirect relationships of the plurality of network access records; and
acquiring (S14) an address to be searched, and determining a final address to which the address to be searched is redirected according to the set of redirect relationships.

2. The network data processing method according to claim 1, wherein the determining (S 13) the set of redirect relationships for all of the addresses in the plurality of network access records according to the plurality of first redirect relationships, comprises:
initializing (S131) the set of redirect relationships to include one of the plurality of first redirect relationships;
traversing (S132) other first redirect relationships among the plurality of first redirect relationships; and
in a case where the set of redirect relationships includes a second redirect relationship from the source address to other addresses in the plurality of first redirect relationships, and includes a third redirect relationship from the target address to other addresses in the plurality of first redirect relationships, adding (S133) a fourth redirect relationship from a final address to which the source address is redirected to a final address to which the target address is redirected into the set of redirect relationships.

3. The network data processing method according to claim 2, wherein the determining (S 13) the set of redirect relationships for all of the addresses in the plurality of network access records according to the plurality of first redirect relationships, further comprises:
in a case where the set of redirect relationships does not include the second direct relationship but includes the third redirect relationship, adding (S134) a fifth redirect relationship from the source address to the final address to which the target address is redirected into the set of redirect relationships.

4. The network data processing method according to claim 2, wherein the determining (S 13) the set of redirect relationships for all of the addresses in the plurality of network access records according to the plurality of first redirect relationships, further comprises:
in a case where the set of redirect relationships does not include the second redirect relationship, but includes the third redirect relationship, adding (S135) the first redirect relationship from the source address to the target address into the set of redirect relationships.

5. The network data processing method according to claim 2, wherein the determining (S 13) the set of redirect relationships for all of addresses in the plurality of network access records according to the plurality of first redirect relationships, further comprises:
in a case where the set of redirect relationships includes the second redirect relationship but does not include the third redirect relationship, adding (S136) a sixth redirect relationship from the final address to which the source address to the target address into the set of redirect relationships.

6. The network data processing method according to any of claims 1 to 5, wherein the set of redirect relationships is represented based on at least one tree structure dataset, wherein child nodes in the tree structure dataset are redirected to a parent node in the tree structure dataset.

7. A network data processing apparatus (400), comprising:
an acquiring module (410) for acquiring a plurality of network access records, each of the plurality of network access records includes a source address and a target address;
a first determination module (420) for determining a first redirect relationship from the source address to the target address in a respective network access record of the network access records;
a second determination module (430) for determining a set of redirect relationships for all of addresses in the plurality of network access records according to a plurality the first redirect relationships; and
a third determination module (440) for acquiring an address to be searched, and determining a final address to which the address to be searched is redirected according to the set of redirect relationships.

8. The network data processing apparatus (400) according to claim 7, wherein the second determination module (430) comprises:
an initialization sub-module (431) for initializing the set of redirect relationships to include one of the plurality of first redirect relationships;
a traversal sub-module (432) for traversing other first redirect relationships among the plurality of first redirect relationships; and
a first adding sub-module (433) for, in a case where the set of redirect relationships includes a second redirect relationship from the source address to other addresses in the first redirect relationships, and includes a third redirect relationship from the target address to other addresses in the first redirect relationships, adding a fourth redirect relationship from a final address to which the source address is redirected to a final address to which the target address is redirected into the set of redirect relationships.

9. The network data processing apparatus (400) according to claim 8, wherein the second determination module (430) further comprises:
a second adding sub-module (434) for, in a case where the set of redirect relationships does not include the second redirect relationship, but includes the third redirect relationship, adding a fifth redirect relationship from the source address to the final address to which the target address is redirected into the set of redirect relationships.

10. The network data processing apparatus (400) according to claim 8, wherein the second determination module (430) further comprises:
a third adding sub-module (435) for, in a case where the set of redirect relationships does not include the second redirect relationship, but includes the third redirect relationship, adding the first redirect relationship from the source address to the target address into the set of redirect relationships.

11. The network data processing apparatus (400) according to claim 8, wherein the second determination module (430) further comprises:
a fourth adding sub-module (436) for, in a case where the set of redirect relationships includes the second redirect relationship but does not include the third redirect relationship, adding a sixth redirect relationship from the final address to which the source address to the target address into the set of redirect relationships.

12. The network data processing apparatus (400) according to any of claims 7 to 11, wherein the set of redirect relationships is represented based on at least one tree structure dataset, wherein child nodes in the tree structure dataset are redirected to a parent node in the tree structure dataset.

13. An electronic device, comprising:
at least one processor (601); and
a memory (602) communicatively connected with the at least one processor; wherein
the memory (602) stores instructions executable by the at least one processor (601), the instructions being executed by the at least one processor (601) to enable the at least one processor (601) to perform the network data processing method according to any of claims 1 to 6.

14. A computer readable storage medium storing computer instructions, wherein the computer instructions cause a computer to perform the network data processing method according to any of claims 1 to 6.

15. A computer program product comprising computer executable instructions, wherein the executable instructions, when executed by a processor (601), cause the processor (601) to execute the network data processing method according to any of claims 1 to 6.
